# EUROPÄISCHE PATENTSCHRIFT

(11) **EP 2 530 344 B1**
(45) Veröffentlichungstag und Bekanntmachung des Hinweises auf die Patenterteilung: **02.11.2016**
(21) Anmeldenummer: 12002093.8
(22) Anmeldetag: 24.03.2012
(51) Int. Cl.: F16D 3/205

(54) **Rollelement eines Tripodegelenks sowie Tripodegelenk, aufweisend ein derartiges Rollelement**
Roller element of a tripod joint and tripod joint comprising such a roller element
Élément de roulement d'une articulation de trépied ainsi qu'articulation de trépied comprenant un tel élément de roulement

(30) Priorität: 03.06.2011 DE 102011103247
(43) Veröffentlichungstag der Anmeldung: 05.12.2012
(73) Patentinhaber: Volkswagen Aktiengesellschaft, 38440 Wolfsburg (DE)
(72) Erfinder: Zornhagen, Marco, 38302 Wolfenbüttel (DE); Mick, Alexander, 38446 Wolfsburg (DE)

(56) Entgegenhaltungen:
- EP-A1- 0 861 992
- DE-A1- 10 059 962
- FR-A1- 2 554 528
- FR-A1- 2 580 751
- US-A1- 2003 045 363

## Beschreibung

Die vorliegende Erfindung betrifft ein Rollelement eines Tripodegelenks sowie ein Tripodegelenk aufweisend ein solches Rollelement.

### STAND DER TECHNIK

Rollelemente und Tripodegelenke mit Rollelementen sind bekannt. Sie werden verwendet, um Längenversatz und Winkelversatz zwischen zwei rotierenden Wellen ausgleichen zu können. Dabei ist das Tripodegelenk mit einer Gelenkaußenwelle sowie einer Tripodenwelle versehen. Der Tripodenstern der Tripodenwelle ist im Inneren eines Gelenkaußenteils der. Gelenkaußenwelle gelagert. Die Lagerung erfolgt dabei in einer Art und Weise, dass sowohl ein Längenversatz, als auch ein Verkippen der Tripodenwelle möglich ist. Dies wird dadurch erzielt, dass über Wälzkörper ein axialer Ausgleich und über eine Zapfenverbindung ein verkippender Ausgleich möglich wird. Es ist auch schon vorgeschlagen worden diese Wälzkörper in Linearführungen zu verwenden.

Ein derartiges Rollelement und Tripodegelenk ist zum Beispiel aus der DE 10 2007 059 378 A1 oder aus der US 2003/045363 A1 bekannt. Das dort offenbarte Rollelement ist mit Federelementen versehen, die zwischen einem inneren und einem äußeren Gehäuseteil abgestützt sind und auf diese Weise Wälzkörper gegen deren Laufbahnen drücken. Trotzdem ist ein Herausziehen des Rollelementes grundsätzlich möglich.

Aus der DE 10 2007 046 837 A1 ist ebenfalls ein Tripodegelenk bekannt. Bei dieser technischen Lösung wurde eine Querschnittsreduktion verwendet, um ein Herausziehen des Rollelementes zu verhindern. Die Montage des hierfür notwendigen Sperrelements ist jedoch sehr aufwendig, so dass die Komplexität des Gelenks und insbesondere dessen Herstellkosten, dadurch deutlich zunehmen.

Nachteilig bei bekannten Rollelementen sowie bei bekannten Tripodegelenken ist es, dass während der Montage beziehungsweise während des Transportes zur Montage die Gefahr besteht, dass das jeweilige Rollelement aus der Führung aus einem Gehäuseaußenteil herausgezogen wird. Ein solches Herausziehen hat zur Folge, dass für die nachfolgende Montage ein Wiedereinfädeln des Rollelementes notwendig ist. Dies ist mit großem Aufwand verbunden oder zum Teil überhaupt nicht möglich. Dies gilt insbesondere, wenn sich das Rollelement im Inneren einer Manschette befindet, welche das Tripodegelenk zumindest teilweise umgibt. In einem solchen Fall müsste die Manschette entfernt werden, was zum Teil nicht möglich bzw. mit einem hohen Aufwand verbunden ist.

### AUFGABE DER ERFINDUNG

Es ist Aufgabe der vorliegenden Erfindung ein Rollelement sowie ein Tripodegelenk zur Verfügung zu stellen, welche die voranstehend aufgeführten Probleme beheben. Insbesondere ist es Aufgabe der vorliegenden Erfindung ein Rollelement und ein Tripodegelenk zur Verfügung zu stellen, mit deren Hilfe der Transport und/oder die Montage desselben verbessert werden können.

### OFFENBARUNG DER ERFINDUNG

Voranstehende Aufgabe wird gelöst durch ein Rollelement mit den Merkmalen des unabhängigen Anspruchs 1 sowie durch ein Tripodegelenk mit den Merkmalen des unabhängigen Anspruchs 11. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Rollelement beschrieben sind, selbstverständlich auch im Zusammenhang mit einem erfindungsgemäßen Tripodegelenk und jeweils umgekehrt, so dass bezüglich der Offenbarung zu den einzelnen Erfindungsaspekten stets wechselseitig Bezug genommen wird beziehungsweise werden kann.

Bei einem erfindungsgemäßen Rollelement eines Tripodegelenks sind die folgenden Komponenten vorgesehen. Ein Gehäuse ist mit einer Aufnahmeöffnung zur Lagerung eines Zapfens eines Tripodesterns ausgestattet. Dem Gehäuse sind Wälzkörper zugeordnet, die zur Abstützung des Gehäuses an einander gegenüberliegenden Laufbahnen eines Gelenkaußenteils des Tripodegelenks dienen. Dabei werden die Wälzkörper durch einen Käfig gehalten, der relativ zum Gehäuse translatorisch bewegbar ist. Weiter weist der Käfig erste Anschlagsflächen und das Gehäuse diesen zugeordnete zweite Anschlagsflächen auf, die derart angeordnet sind, dass dadurch eine erste und eine zweite Endposition des Käfigs relativ zum Gehäuse festgelegt sind.

Mit Hilfe eines erfindungsgemäßen Rollelementes kann über die Zuordnung der jeweiligen Anschlagsflächen eine Ausziehsicherung für das Rollelement aus dem Tripodegelenk zur Verfügung gestellt werden. Unter zugeordneten Anschlagsflächen ist dabei zu verstehen, dass während der translatorischen Bewegung des Käfigs relativ zum Gehäuse die ersten Anschlagsflächen mit den zweiten Anschlagsflächen berührend in Kontakt kommen können.

Das bedeutet, dass der Käfig translatorisch zum Gehäuse bewegbar ist und an einem Ende der Bewegungsbahn mit einer seiner ersten Anschlagsflächen an einer der zweiten Anschlagsflächen des Gehäuses anschlägt. Am anderen Ende der translatorischen Bewegungsbahn schlägt der Käfig mit der anderen seiner ersten Anschlagsflächen an der anderen der zweiten Anschlagsflächen des Gehäuses an. Mit anderen Worten begrenzen die zweiten Anschlagsflächen durch den entstehenden berührenden Kontakt mit den ersten Anschlagsflächen des Käfigs dessen translatorische Bewegungsfreiheit. Die beiden Endpositionen stellen somit Positionen des Käfigs dar, in welchen der Käfig nicht mehr weiter translatorisch bewegt werden kann. Auf diese Weise werden die erste und die zweite Endposition des Käfigs relativ zum Gehäuse festgelegt.

Die Wälzkörper sind durch einen Käfig gehalten. Das bedeutet, dass sie rotatorisch frei von dem Käfig in der gewünschten Position, also zwischen dem Gehäuse und Laufbahnen des Gelenkaußenteils, gehalten sind. Durch die Rotation der Wälzkörper kann die Relativbewegung zwischen dem Käfig und dem Gehäuse einerseits, wie auch zwischen dem Käfig und dem Gelenkaußenteil andererseits stattfinden. Mit anderen Worten rollen die Wälzkörper zwischen dem Gelenkaußenteil, insbesondere dessen Laufbahnen, und dem Gehäuse, insbesondere dessen Außenseite. Das bedeutet, dass sich die Wälzkörper sowohl mit den Laufbahnen des Gelenkaußenteils, als auch mit den entsprechenden Seitenflächen des Käfigs in berührendem Kontakt befinden. Die Lagerung der Wälzkörper in dem Käfig kann dabei zum Beispiel durch die Ausbildung von Fenstern in dem Käfig erzeugt sein. Die Wälzkörper selbst können jegliche Form von Wälzkörpern annehmen, zum Beispiel sind Kugeln, Zylinder, Tonnen oder ähnliche Formen möglich.

Ein erfindungsgemäßes Rollelement ist dahingehend gegen ein Ausziehen aus einem Tripodegelenk gesichert, dass nach Erreichen einer der beiden Endpositionen, insbesondere der ersten Endposition des Käfigs relativ zum Gehäuse, eine weitere Relativbewegung zwischen diesen beiden Komponenten unterbleibt. Dies beruht auf der Tatsache, dass eine Weiterbewegung durch den berührenden Kontakt der beiden jeweiligen Anschlagsflächen nicht mehr möglich ist. Aufgrund der Tatsache, dass eine weitere Relativbewegung nicht möglich ist, wird auch unterbunden, dass sich die Wälzkörper weiter auf der Außenseite des Gehäuses abrollen. Mit anderen Worten blockiert der jeweilige Anschlag den Käfig in der jeweiligen Endposition. Durch diese Blockade kann eine Relativbewegung zwischen dem Gehäuse und den Laufbahnen des Gelenkaußenteils nicht mehr durch ein Abrollen der Wälzkörper erfolgen. Vielmehr sind die Wälzkörper gegen ein weiteres Abrollen durch die Position des Käfigs in einer seiner beiden Endpositionen gesperrt. Die Sperrung der Rotationsmöglichkeit der Wälzkörper hat zur Folge, dass auch kein Abrollen der Wälzkörper auf den Laufbahnen des Gelenkaußenteils mehr erfolgen kann. Mit anderen Worten besteht dort keine rotatorische Freiheit mehr, so dass zwischen den Wälzkörpern und der Laufbahn des Gelenkaußenteils ein Reibschluss vorliegt. Dieser Reibschluss ist jedoch nicht auf einer Rollreibung, sondern auf eine Gleitreibung basierend. Dementsprechend wird über diesen Reibschluss eine Halterung ausgebildet, gegen welche ein weiteres Ausziehen des Rollelementes erfolgen müsste. Mit Hilfe dieser Reibkraft zwischen den Wälzkörpern und der Laufbahn des Gelenkaußenteils erfolgt also die Sicherung des Rollelementes. Man kann diese Reibkraft also auch als Sicherungskraft des Rollelementes bezeichnen.

Hierfür ist es nicht mehr notwendig das Gelenkaußenteil, insbesondere die Laufbahnen, zu verändern. Vielmehr ist bei eingesetztem Rollelement gemäß der vorliegenden Erfindung eine Ausziehsicherung durch das Rollelement selbst gegeben. Dies führt zu dem Vorteil, dass bereits bestehende Gelenkaußenteile verwendet werden können, wenn ein erfindungsgemäßes Rollelement eingesetzt wird. Auch sind keine zusätzlichen und kostenintensiven mechanischen Bearbeitungsschritte für die Laufbahnen des Gelenkaußenteils notwendig, um die Ausziehsicherung herzustellen.

Es kann von Vorteil sein, wenn bei einem erfindungsgemäßen Rollelement die Strecke, die der Käfig zwischen den beiden Endpositionen zurücklegt, weniger oder gleich der Hälfte der Strecke ist, die das Gehäuse zwischen einer ersten und einer zweiten Endposition relativ zu dem Gelenkaußenteils des Tripodegelenks zurücklegt. Bei dieser Form der Linearführung verschiebt sich sozusagen der Käfig zwischen den beiden Endpositionen um eine erste Strecke, während sich das Gehäuse relativ zum Gelenkaußenteil um eine zweite Strecke verschiebt. Diese zweite Strecke ist mehr als doppelt so groß oder gleich groß wie die erste Strecke. Durch dieses Verhältnis wird die gewünschte Bewegungsfreiheit des Rollelementes des Tripodegelenks erzielt und trotzdem eine erfindungsgemäße Ausziehsicherung ermöglicht.

Ein weiterer Vorteil ist es, wenn bei einem erfindungsgemäßen Rollelement in der ersten Endposition des Käfigs, bezogen auf die translatorische Bewegungsrichtung des Käfigs, zumindest ein Wälzkörper zwischen der Stirnfläche des Gelenkaußenteils des Tripodegelenks und dem Mittelpunkt der Aufnahme anordenbar ist. Unter der Stirnfläche des Gelenkaußenteils ist dabei diejenige Fläche zu verstehen, die in einer Ebene liegt, die im Wesentlichen oder vollständig senkrecht auf der translatorischen Bewegungsrichtung des Käfigs relativ zum Gehäuse steht. In gleicher Ausrichtung wird auch Bezug genommen auf den Mittelpunkt der Aufnahmeöffnung, so dass zwei Ebenen definiert werden können, die geometrisch durch den Mittelpunkt des Gehäuses hinsichtlich seiner Aufnahmeöffnung und die Stirnfläche definiert sind. Zwischen diesen beiden Ebenen liegt bei dieser Ausführungsform der vorliegenden Erfindung zumindest ein Wälzkörper. Mit anderen Worten kann dabei auf einer Seite des Mittelpunkts der Aufnahmeöffnung eine Abstützung des Wälzkörpers gegen die Laufbahn erfolgen, welche außerhalb des innenliegenden Abstützbereichs zwischen dem Gehäuse und den Laufbahnen liegt.

Durch eine voranstehende Ausführungsform kann insbesondere in der Kombination mit der Verwendung von Federelementen die volle Federspannung erzielt werden. Das bedeutet, dass insbesondere die Reibkraft und damit die Sicherungskraft für die Ausziehsicherung eines erfindungsgemäßen Rollelementes in dieser Position in idealer Weise, insbesondere in maximaler Weise erzielt wird. Es handelt sich also um eine verbesserte Abstützung des Rollelementes gegen die Laufbahn und damit auch um eine verbesserte Ausziehsicherung.

Es kann weiter von Vorteil sein, wenn bei einem erfindungsgemäßen Rollelement in der ersten Endposition des Käfigs bezogen auf die translatorische Bewegungsrichtung des Käfigs zumindest ein Wälzkörper zwischen der Bodenfläche des Gelenkaußenteils des Tripodegelenks und dem Mittelpunkt der Aufnahme anordenbar ist. Unter der Bodenfläche des Gelenkaußenteils ist dabei eine Fläche zu verstehen, welche als Topfbodenfläche des Gelenkaußenteils ausgebildet sein kann. Eine solche Bodenfläche ist vorteilhafterweise mit Bezug auf die Stirnfläche des Gelenkaußenteils auf der anderen Seite des Rollelementes angeordnet. Insbesondere wird bei einer solchen Ausführungsform eine Kombination mit der im voranstehenden Absatz erläuterten Ausführungsform durchgeführt. Auf diese Weise ist es möglich, dass eine sozusagen symmetrische oder im Wesentlichen symmetrische Abstützung des Rollelementes gegen die Laufbahnen erfolgt. Diese sozusagen symmetrische Abstützung ermöglicht es, dass das Rollelement gegen ein Verkippen in dem Tripodegelenk gesichert ist. Die Kraft, welche von dem Gehäuse, insbesondere von Federelementen des Gehäuses, auf die Wälzkörper und damit auf die Laufbahn übertragen wird, wird dabei im Wesentlichen gleichmäßig auf die einzelnen Wälzkörper verteilt. Vorteilhafterweise wird auf diese Weise eine Ausführungsform erzeugt, bei welcher die Sicherungskraft und damit auch die Reibkraft zwischen jedem Wälzkörper zueinander sehr ähnlich oder sogar identisch ist.

Ein weiterer Vorteil kann es sein, wenn bei einem erfindungsgemäßen Rollelement zur Erhöhung der Reibkraft zwischen den Wälzkörpern und der Laufbahn und über dem Gehäuse Federelemente vorgesehen sind, die über das Gehäuse die Wälzkörper auf die Laufbahnen drücken und sich gegen den Zapfen in der Aufnahmeöffnung abstützen können. Bei einem montierten erfindungsgemäßen Rollelement wird also durch solche Federelemente, welche zum Beispiel aus einem elastischen Material oder aber auch als Plattfedern oder Spiralfedern ausgebildet sein können, eine Erhöhung beziehungsweise eine Vergleichmäßigung der Reibungskraft und damit der Sicherungskraft durch die Wälzkörper erzielt. Die Federelemente dienen dabei nicht ausschließlich nur der Erhöhung der Reibungskraft, sondern können auch für weitere Funktionen zum Einsatz kommen. So ist es möglich, dass diese Federelemente auch dem Ausgleich von Unebenheiten des Gehäuses, der Wälzkörper und/oder der Laufbahnen dienen.
Bei der Ausbildung eines erfindungsgemäßen Rollelements mit Federelementen sind diese vorteilhafterweise derart angeordnet, dass sie die Wälzkörper mit einer über den Verschiebeweg des Rollelements und/oder über die zugelassenen Beugewinkel des Tripodegelenks konstanten Kraft auf die Laufbahnen drücken. Auf diese Weise wird nicht nur die Federkraft, sondern auch die erzeugte Reibungskraft zwischen den Wälzkörpern und den Laufbahnen konstant oder im Wesentlichen konstant gehalten. Damit ist eine definierte Auslegung dieser Reibungskraft möglich, die einen großen Einfluss auf den beim Verschieben des Rollelements entstehenden Schall beinhaltet. So ist es möglich, über die konstante Kraftausübung auch die akustischen Auswirkungen des Verschiebens über den Verschiebeweg und/oder über die verschiedenen Beugewinkel des Tripodegelenks konstant oder im Wesentlichen konstant zu halten.

Auch vorteilhaft ist es, wenn bei einem erfindungsgemäßen Rollelement die ersten und zweiten Anschlagsflächen sich jeweils entlang einer Ebene erstrecken, auf der die translatorische Bewegungsrichtung des Käfigs relativ zum Gehäuse senkrecht steht. Es handelt sich also um eine Ausführungsform, bei welcher die Anschlagsflächen im Wesentlichen senkrecht auf der translatorischen Bewegüngsrichtung stehen. Dies hat den Vorteil, dass beim Kontaktieren der jeweils ersten und zweiten Anschlagsfläche miteinander ein weiteres Abrutschen, also zum Beispiel ein keilförmiges Verschieben des Gehäuses relativ zum Käfig, nicht mehr möglich ist. Darüber hinaus kann auf diese Weise besonders kompakt die erfindungsgemäße Anordnung der Anschlagfläche hinsichtlich der Funktionalität zur Definition der Endpositionen des Käfigs erzielt werden.

Auch vorteilhaft kann es sein, wenn bei einem erfindungsgemäßen Rollelement die zweiten Anschlagsflächen zumindest abschnittsweise durch die Stirnflächen des Gehäuses gebildet sind. Die Stirnflächen des Gehäuses sind dabei die Flächen, welche das Gehäuse mit Bezug auf eine Erstreckung in Richtung der translatorischen Bewegungsrichtung des Käfigs abschließen. Eine Anordnung der Anschläge an diesen Stirnflächen bringt den Vorteil mit sich, dass diese Anschlagsflächen nicht seitlich, also quer zur translatorischen Bewegungsrichtung des Käfigs, über das Gehäuse überstehen. Die Breite des Gehäuses bei einem erfindungsgemäßen Rollelement kann auf diese Weise reduziert, insbesondere minimiert werden.

Auch vorteilhaft ist es, wenn bei einem erfindungsgemäßen Rollelement die ersten Anschlagsflächen zumindest abschnittsweise durch die Innenflächen eines als Rahmen geformten Käfigs ausgebildet sind. Diese Ausführungsform ist vorteilhafterweise mit derjenigen kombiniert, welche im voranstehenden Absatz erläutert worden ist. Ein als Rahmen ausgeführter Käfig hat den Vorteil, dass er eine hohe Stabilität aufweist. Die korrespondierenden, also die einander zugeordneten, Anschlagsflächen von der Innenseite des Rahmens und der Stirnseite des Gehäuses ermöglichen eine besonders schmale Ausführungsform des erfindungsgemäßen Rollelementes. Zur Definition der beiden Endpositionen des Käfigs muss kein Element, also weder ein Bestandteil des Käfigs, noch ein Bestandteil des Gehäuses, über dessen Breite erstreckend hinausragen. Durch diese Kompaktheit kann auch das gesamte Tripodegelenk kompakter ausgestaltet werden. Insbesondere ist es auf diese Weise möglich auch bereits bestehende Tripodegelenke mit einem erfindungsgemäßen Rollelement auszustatten.

Ebenfalls vorteilhaft ist es, wenn der Käfig eines erfindungsgemäßen Rollelementes wenigstens einen Steg aufweist, der sich zwischen den beiden entgegengesetzten Laufbahnen erstreckt und zumindest abschnittsweise die ersten Anschlagsflächen ausbildet. Diese Ausführungsform kann alternativ oder zusätzlich zu den voranstehend genannten Ausführungsformen des Käfigs und der Anschlagflächen ausgebildet sein. Das Vorsehen eines Stegs hat den Vorteil, dass im Gegensatz zu einer rahmenförmigen Ausgestaltung keine Verlängerung des Rollelementes stattfinden muss. Vielmehr sind die ersten Anschlagsflächen und vorteilhafterweise auch die diesen zugeordneten zweiten Anschlagsflächen seitlich an dem Rollelement angeordnet, so dass zwar eine Verbreiterung desselben stattfindet, jedoch deren geometrische Erstreckung in Richtung der translatorischen Bewegung des Käfigs keine Veränderung erfährt. Auf diese Weise ist also eine längenreduzierte Ausführung eines erfindungsgemäßen Rollelementes möglich.

Ebenfalls Gegenstand der vorliegenden Erfindung ist ein Tripodegelenk, aufweisend einen Tripodenstern mit radial abstehenden Zapfen, ein Gelenkaußenteil, das parallel zu seiner Drehachse verlaufende Laufbahnpaare mit einander in Umfangsrichtung gegenüberliegenden Laufbahnen aufweist, und Rollelemente gemäß der vorliegenden Erfindung. Insbesondere handelt es sich um ein Tripodegelenk mit drei Zapfen und dementsprechend auch drei Rollelementen. Die Vorteile eines erfindungsgemäßen Tripodengelenks sind durch die Verwendung eines erfindungsgemäßen Rollelementes mit den Vorteilen desselben identisch.

### BEVORZUGTE AUSFÜHRUNGSBEISPIELE

Die vorliegende Erfindung wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren normal lesbaren Bezugszeichen. Es zeigen schematisch:
- Figur 1: in perspektivischem Teilschnitt eine Ausführungsform eines erfindungsgemäßen Tripodegelenks,
- Figur 2a: eine Ausführungsform eines erfindungsgemäßen Rollelementes im Querschnitt,
- Figur 2b: die Ausführungsform der Fig. 2a in Seitenansicht;
- Figur 3a: die Ausführungsform des Rollelementes gemäß der Fig. 2a und 2b mit dem Käfig in der ersten Endposition,
- Figur 3b: die Ausführungsform der Fig. 3a mit dem Käfig in der zweiten Endposition,
- Figur 4a: eine weitere Ausführungsform des erfindungsgemäßen Rollelementes mit dem Käfig in der zweiten Endposition, und
- Figur 4b: eine Ausführungsform der Fig. 4a mit dem Käfig in der ersten Endposition.

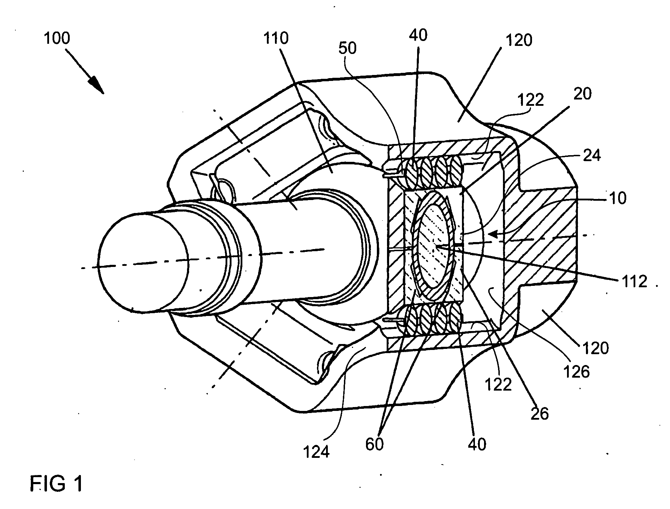

Anhand der Fig. 1 wird kurz ein erfindungsgemäßes Tripodegelenk 100 und die Anordnung eines erfindungsgemäßen Tripodegelenks 100 dargestellt. Das Tripodegelenk 100 weist ein Gelenkaußenteil 120 auf, welches die Tripodenwelle und damit auch den Tripodenstern 110 umgibt. Hierfür weist das Gelenkaußenteil 120 eine topfförmige Vertiefung auf, in welche der Tripodestern 110 hineinragt. Der Tripodenstern 110 dieser Ausführungsform weist drei Zapfen 112 auf, welche jeweils über ein erfindungsgemäßes Rollelement 10 gelagert sind. Dabei ist durch die topfenförmige Konstruktion des Gelenkaußenteils 122 sowohl eine Bodenfläche 126, wie auch eine Stirnfläche 124 definiert. Das Rollelement 10 dieser Ausführungsform ist als Linearführung ausgebildet und nimmt in seiner zentralen Aufnahmeöffnung 30 den Zapfen 112 des Tripodensterns 110 auf. Über Wälzkörper 40 ist das Gehäuse 20, in welchem die Aufnahmeöffnung 30 ausgebildet ist, gegen die Laufbahnen 122 im Gelenkaußenteil 120 abgestützt.

Weiter ist der Fig. 1 zu entnehmen, das bei dieser Ausführungsform des Tripodegelenks 100 das Gehäuse 20 zweiteilig, also mit einem ersten Gehäuseteil 24 und einem zweiten Gehäuseteil 26, ausgebildet ist. Darüber hinaus stützt sich das jeweilige Gehäuseteil 24 und 26 über Federelemente 60 gegen die Aufnahmeöffnung 30 und damit den Zapfen 112 ab. Über die Federelemente 60 kann also eine Vorspannung auf die Wälzkörper 40 zur Abstützung auf der Laufbahn 122 übertragen werden.

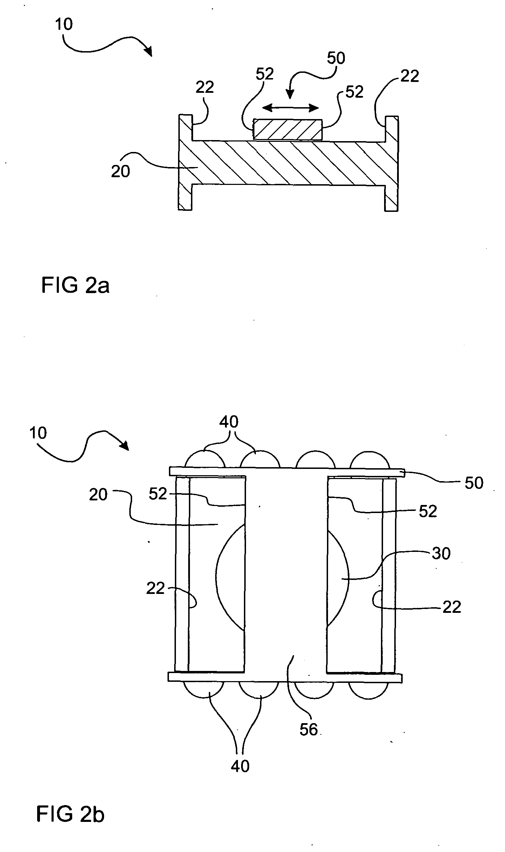

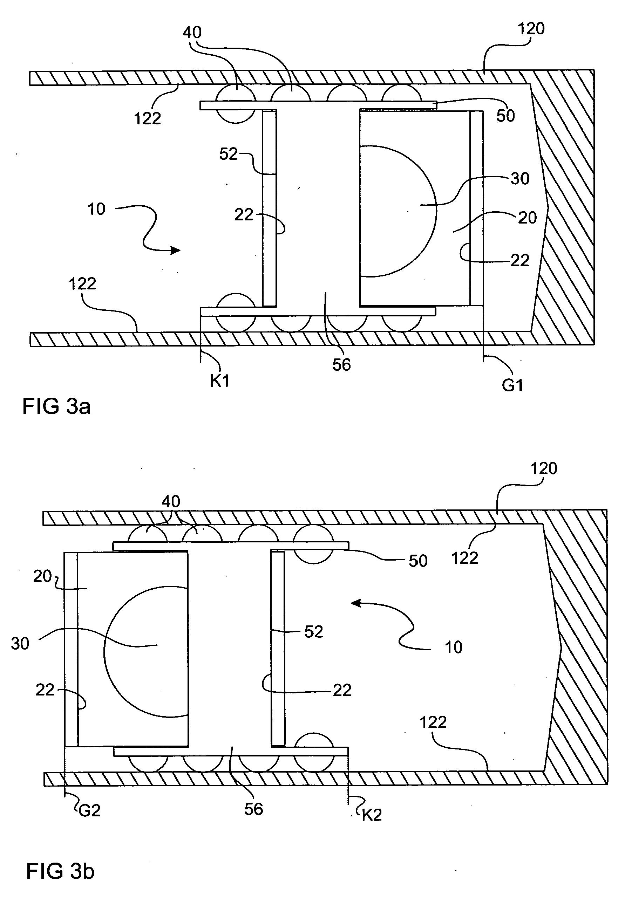

Anhand der Fig. 2a, 2b, 3a und 3b wird die Funktionalität der Ausziehsicherung eines erfindungsgemäßen Rollelementes 10 näher erläutert. In Fig. 2a ist in einem schematischen Querschnitt ein Schnitt durch das Rollelement 10 dargestellt. Insbesondere sind im Querschnitt das Gehäuse 20 und der Käfig 50 zu erkennen. Der Käfig 50 dieser Ausführungsform weist, wie aus Fig. 2b erkennbar ist, einen Steg 56 auf. Dieser ist nur auf einer Seite des Gehäuses 20 entlang geführt, da auf diese Weise die Aufnahmeöffnung 30 von der anderen Seite für den Zapfen 112 des Tripodesterns 110 frei zugänglich ist. Der Käfig 50 dieser Ausführungsform hält Wälzkörper 40 in Form von Kugeln in der gewünschten Position rotatorisch frei an der Außenseite des Gehäuses 20.

Bei dieser Ausführungsform der Fig. 2a und 2b sind erste Anschlagsflächen 52 am Käfig 50 und zweite Anschlagsflächen 22 am Gehäuse 20 vorgesehen. Die zweiten Anschlagsflächen 22 sind dabei als Absätze auf den Seitenflächen des Gehäuses 20 ausgebildet. Gegen diese zweiten Anschläge 22 kann der Steg 56 des Käfigs 50 über seine ersten Anschlagsflächen 52 anschlagen, also in berührenden Kontakt gelangen.

Anhand der Fig. 3a und 3b wird die translatorische Bewegungsfreiheit und damit auch die Möglichkeit der Ausziehsicherung eines erfindungsgemäßen Rollelementes 10 näher erläutert. Zur besseren Anschaulichkeit ist ein Gelenkaußenteil 120 des Tripodegelenks 100 im schematischen Teilschnitt dargestellt. In Fig. 3a befindet sich der Käfig 50 in einer ersten Endposition K1, während sich der Käfig 50 in der Fig. 3b in einer zweiten Endposition K2 befindet. Für die Verschiebung des Rollelements 10 erfolgt also eine Relativbewegung zwischen dem Käfig 50 und dem Gehäuse 20. Betrachtet man das Rollelement 10 für sich alleine beziehungsweise in Kombination mit dem Tripodegelenk 100, in welches es eingesetzt werden soll, so kann die Position der Fig. 3a als vollständig eingefahrene Position und die Position gemäß der Fig. 3b als vollständig ausgefahrene Position des Rollelements 10 bezeichnet werden. In vollständig ausgefahrener Position befinden sich der erste Anschlag 52 und der zweite Anschlag 22 miteinander in berührendem Kontakt, wie es in Fig. 3b dargestellt ist. In dieser Position ist also eine Weiterbewegung des Käfigs nach rechts beziehungsweise des Gehäuses 20 im Tripodegelenk 100 nach links nicht möglich. Durch diese Blockade einer Bewegung des Gehäuses 20 und des Käfigs 50 werden auch die Wälzkörper 40 in der Position gemäß Fig. 3b bzw. gemäß der Fig. 3a gehalten. Da sich die Wälzkörper 40 auch in dieser Position auf den Laufbahnen 122 des Gelenkaußenteils 120 abstützen, kann keine Rotation der Wälzkörper 40 mehr erfolgen. Aufgrund der mangelnden Rotationsfreiheit in dieser Position erfolgt also ein Reibschluss zwischen den Wälzkörpern 40 und den Laufbahnen 122 des Gelenkaußenteils 120. Dieser Reibschluss erzeugt eine Reibkraft, die gleichzeitig als Sicherungskraft dient und einem weiteren Herausziehen des Rollelementes 10 aus der Linearführung des Gelenkaußenteils 120 entgegenwirkt.

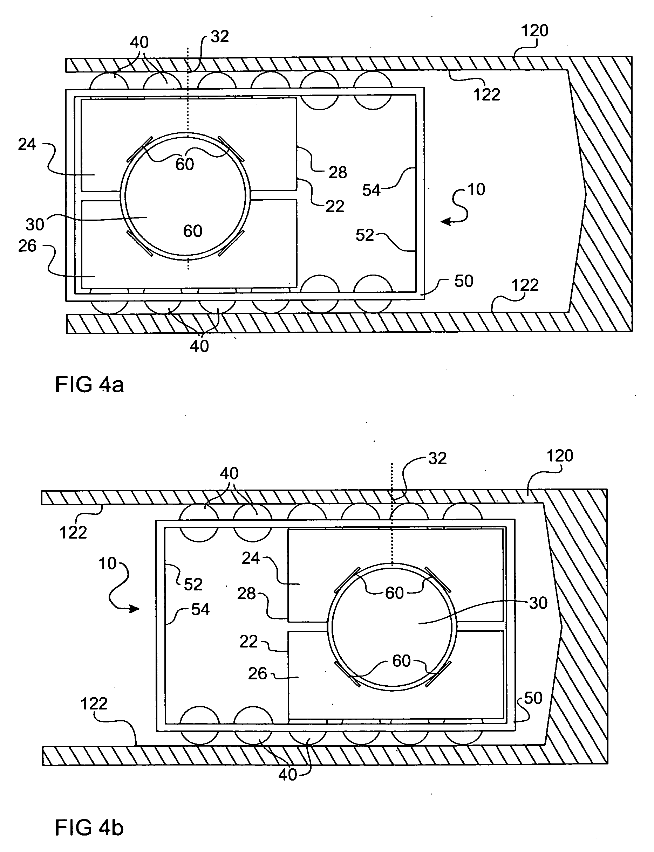

In den Fig. 4a und 4b ist eine weitere Ausführungsform eines erfindungsgemäßen Rollelementes 10 dargestellt. Diese Ausführungsform unterscheidet sich von der der Fig. 2a bis 3b dadurch, dass der Käfig 50 rahmenartig ausgebildet ist. Dies ermöglicht es zum einen eine größere Anzahl von Wälzkörpern 40 auf im Wesentlichen gleichen Volumen des Rollelements 10 zur Verfügung zu stellen. Auf diese Weise kann die Linearführung, insbesondere das Rollelement 10, noch sanfter gleiten und darüber hinaus über eine Mehrzahl von Wälzkörpern 40 auch die Sicherungsfunktion durch eine Erhöhung der Reibkontakte zwischen den Wälzkörpern 40 und den Laufbahnen 122 verbessert werden. Weiter sind die ersten und zweiten Anschläge 22 und 52 bei dieser Ausführungsform an anderen Positionen vorgesehen. Das Gehäuse 20 weist die zweiten Anschläge 22 an seinen Stirnflächen auf. Diesen zugeordnet sind erste Anschlagsflächen 52, welche an den Innenflächen 54 des rahmenförmigen Käfigs 50 ausgebildet sind. Der besseren Anschaulichkeit halber ist auch in dieser Figur im schematischen Teilschnitt ein Gelenkaußenteil 120 eines Tripodegelenks 100 dargestellt.

Fig. 4a zeigt wieder die vollständig ausgefahrene Position des Rollelementes 10 in einem Tripodegelenk 100, während Fig. 4b die vollständig eingefahrene Position zeigt. Auch hier ist die Funktionsweise dieselbe hinsichtlich der automatischen Ausziehsicherung des Rollelementes 10. Vorteil dieser Ausführungsform ist es, dass die Breite eines solchen Rollelementes 10 mit Vergleich zu der Ausführungsform der Fig. 2a bis 3b reduziert ist. Die Anschläge 22 und 52 stehen insbesondere nicht über die Dicke der Erstreckung des Gehäuses 20 und/oder des Käfigs 50 hervor.

Es ist selbstverständlich, dass es sich bei den Ausführungen zu den vorhergenannten Ausführungsformen nur um Beispiele handelt. Deren einzelne Merkmale können, sofern technisch sinnvoll, frei miteinander kombiniert werden, ohne dass der Rahmen der vorliegenden Erfindung verlassen wird.

### Bezugszeichen

- 10: Rollelement
- 20: Gehäuse
- 22: zweite Anschlagsflächen
- 24: erstes Gehäuseteil
- 26: zweites Gehäuseteil
- 28: Stirnfläche des Gehäuses
- 30: Aufnahmeöffnung
- 32: Mittelpunkt der Aufnahmeöffnung
- 40: Wälzkörper
- 50: Käfig
- 52: erste Anschlagsflächen
- 54: Innenfläche des Käfigs
- 56: Steg des Käfigs
- 60: Federelement
- 100: Tripodegelenk
- 110: Tripodenstern
- 112: Zapfen
- 120: Gelenkaußenteil
- 122: Laufbahn
- 124: Stirnfläche
- 126: Bodenfläche
- K1: erste Endposition des Käfigs
- K2: zweite Endposition des Käfigs
- G1: erste Endposition des Gehäuses
- G2: zweite Endposition des Gehäuses

## Patentansprüche

1. Rollelement (10) eines Tripodegelenks (100), aufweisend
ein Gehäuse (20) mit einer Aufnahmeöffnung (30) zur Lagerung eines Zapfens (112) eines Tripodesterns (110),
dem Gehäuse (20) zugeordnete Wälzkörper (40) zur Abstützung des Gehäuses (20) an einander gegenüberliegenden Laufbahnen (122) eines Gelenkaußenteils (120) des Tripodegelenks (100), wobei die Wälzkörper (40) durch einen Käfig (50) gehalten sind, der relativ zum Gehäuse (20) translatorisch bewegbar ist, und
**dadurch gekennzeichnet, dass**
der Käfig (50) erste Anschlagsflächen (52) und das Gehäuse (20) diesen zugeordnete zweite Anschlagsflächen (22) aufweisen, die derart angeordnet sind, dass dadurch eine erste und eine zweite Endposition (K1, K2) des Käfigs (50) relativ zum Gehäuse (20) festgelegt sind.

2. Rollelement (10) nach Anspruch 1, **dadurch gekennzeichnet, dass** die Strecke, die der Käfig (50) zwischen den beiden Endpositionen (K1, K2) zurücklegt, weniger oder gleich der Hälfte der Strecke ist, die das Gehäuse (20) zwischen einer ersten und einer zweiten Endposition (G1, G2) relativ zu dem Gelenkaußenteil (120) des Tripodegelenks (100) zurücklegt.

3. Rollelement (10) nach einem der vorangegangenen Ansprüche, **dadurch gekennzeichnet, dass** in der ersten Endposition (K1) des Käfigs (50) bezogen auf die translatorische Bewegungsrichtung des Käfigs (50) zumindest ein Wälzkörper (40) zwischen der Stirnfläche (124) des Gelenkaußenteils (120) des Tripodegelenks (100) und dem Mittelpunkt (32) der Aufnahmeöffnung (30) anordenbar ist.

4. Rollelement (10) nach einem der vorangegangenen Ansprüche, **dadurch gekennzeichnet, dass** in der ersten Endposition (K1) des Käfigs (50) bezogen auf die translatorische Bewegungsrichtung des Käfigs (50) zumindest ein Wälzkörper (40) zwischen der Bodenfläche (126) des Gelenkaußenteils (120) des Tripodegelenks (100) und dem Mittelpunkt (32) der Aufnahmeöffnung (30) anordenbar ist.

5. Rollelement (10) nach einem der vorangegangenen Ansprüche, **dadurch gekennzeichnet, dass** zur Erhöhung der Reibkraft zwischen den Wälzkörpern (40) und den Laufbahnen (122) und/oder dem Gehäuse (20) Federelemente (60) vorgesehen sind, die über das Gehäuse (20) die Wälzkörper (40) auf die Laufbahnen (122) drücken und sich gegen den Zapfen (112) in der Aufnahmeöffnung (30) abstützen können.

6. Rollelement (10) nach Anspruch 5, **dadurch gekennzeichnet, dass** die Federelemente (60) derart angeordnet sind, dass sie die Wälzkörper (40) mit einer über den Verschiebeweg des Rollelements (10) und/oder über die zugelassenen Beugewinkel des Tripodegelenks (100) konstanten Kraft auf die Laufbahnen (122) drücken.

7. Rollelement (10) nach einem der vorangegangenen Ansprüche, **dadurch gekennzeichnet, dass** die ersten und zweiten Anschlagsflächen (52, 22) sich jeweils entlang einer Ebene erstrecken, auf der die translatorische Bewegungsrichtung des Käfigs (50) relativ zum Gehäuse (20) senkrecht steht.

8. Rollelement (10) nach einem der vorangegangenen Ansprüche, **dadurch gekennzeichnet, dass** die zweiten Anschlagsflächen (22) zumindest abschnittsweise durch die Stirnflächen (28) des Gehäuses (22) gebildet sind.

9. Rollelement (10) nach einem der vorangegangenen Ansprüche, **dadurch gekennzeichnet, dass** die ersten Anschlagsflächen (52) zumindest abschnittsweise durch die Innenflächen (54) eines als Rahmen geformten Käfigs (50) ausgebildet sind.

10. Rollelement (10) nach einem der vorangegangenen Ansprüche, **dadurch gekennzeichnet, dass** der Käfig (50) wenigstens einen Steg (56) aufweist, der sich zwischen den beiden entgegengesetzten Laufbahnen (122) erstreckt und zumindest abschnittsweise die ersten Anschlagsflächen (52) ausbildet.

11. Tripodegelenk (100), aufweisend einen Tripodenstern (110) mit radial abstehenden Zapfen (112), ein Gelenkaußenteil (120), das parallel zu seiner Drehachse verlaufende Laufbahnpaare mit einander in Umfangsrichtung gegenüberliegenden Laufbahnen (122) aufweist und Rollelemente (10) mit den Merkmalen eines der vorangegangenen Ansprüche.

## Claims

1. Rolling element (10) of a constant velocity tripod joint (100), having
a housing (20) with a receiving opening (30) for mounting a pivot (112) of a tripod star (110), anti-friction bodies (40) which are assigned to the housing (20) for supporting the housing (20) on raceways (122) which lie opposite one another of a joint outer part (120) of the constant velocity tripod joint (100), the anti-friction bodies (40) being held by way of a cage (50) which can be moved in a translational manner relative to the housing (20), and **characterized in that**
the cage (50) has first stop faces (52), and the housing (20) has second stop faces (22) which are assigned to the said first stop faces (52), which stop faces are arranged in such a way that a first and a second end position (K1, K2) of the cage (50) relative to the housing (20) are fixed as a result.

2. Rolling element (10) according to Claim 1, **characterized in that** the path which is covered by the cage (50) between the two end positions (K1, K2) is less than or equal to half the path which the housing (20) covers between a first and a second end position (G1, G2) relative to the joint outer part (120) of the constant velocity tripod joint (100).

3. Rolling element (10) according to either of the preceding claims, **characterized in that**, in the first end position (K1) of the cage (50), at least one anti-friction body (40) can be arranged between the end face (124) of the joint outer part (120) of the constant velocity tripod joint (100) and the centre point (32) of the receiving opening (30) in relation to the translational movement direction of the cage (50).

4. Rolling element (10) according to one of the preceding claims, **characterized in that**, in the first end position (K1) of the cage (50), at least one anti-friction body (40) can be arranged between the bottom face (126) of the joint outer part (120) of the constant velocity tripod joint (100) and the centre point (32) of the receiving opening (30) in relation to the translational movement direction of the cage (50).

5. Rolling element (10) according to one of the preceding claims, **characterized in that**, in order to increase the frictional force between the anti-friction bodies (40) and the raceways (122) and/or the housing (20), spring elements (60) are provided which press the anti-friction bodies (40) onto the raceways (122) via the housing (20) and can be supported against the pivot (112) in the receiving opening (30).

6. Rolling element (10) according to Claim 5, **characterized in that** the spring elements (60) are arranged in such a way that they press the anti-friction bodies (40) onto the raceways (122) with a force which is constant over the displacement travel of the rolling element (10) and/or over the permitted deflection angles of the constant velocity tripod joint (100).

7. Rolling element (10) according to one of the preceding claims, **characterized in that** the first and second stop faces (52, 22) extend in each case along a plane, on which the translational movement direction of the cage (50) relative to the housing (20) lies perpendicularly.

8. Rolling element (10) according to one of the preceding claims, **characterized in that** the second stop faces (22) are formed at least in sections by way of the end faces (28) of the housing (22).

9. Rolling element (10) according to one of the preceding claims, **characterized in that** the first stop faces (52) are configured at least in sections by way of the inner faces (54) of a cage (50) which is shaped as a frame.

10. Rolling element (10) according to one of the preceding claims, **characterized in that** the cage (50) has at least one web (56) which extends between the two opposite raceways (122) and configures the first stop faces (52) at least in sections.

11. Constant velocity tripod joint (100), having a tripod star (110) with radially protruding pivots (112), a joint outer part (120) which has raceway pairs which run parallel to its rotational axis with raceways (122) which lie opposite one another in the circumferential direction, and rolling elements (10) having the features of one of the preceding claims.

## Revendications

1. Élément de roulement (10) d'une articulation de trépied (100), comportant :
un carter (20) avec une ouverture de logement (30) pour le positionnement d'un tenon (112) d'une étoile de trépied (110) ;
des corps de rouleau (40) associés au carter (20) pour maintenir le carter (20) au niveau des pistes de roulement (122), opposées les unes par rapport aux autres, d'une partie extérieure d'articulation (120) de l'articulation de trépied (100), les corps de rouleau (40) étant maintenus par une cage (50) mobile translationnellement par rapport au carter (20) ; et
**caractérisé en ce que** la cage (50) comporte des premières surfaces de butée (52) et le carter (20) comporte des deuxièmes surfaces de butée (22) associées à elles disposées de telle sorte qu'une première et une deuxième position terminale (K1, K2) de la cage (50) sont fixées par rapport au carter (20).

2. Élément de roulement (10) selon la revendication 1, **caractérisé en ce que** le tronçon parcourant la cage (50) entre les deux positions terminales (K1, K2) est de la moitié au moins du tronçon parcourant le carter (20) entre une première et une deuxième position terminale (G1, G2) par rapport à la partie extérieure d'articulation (120) de l'articulation de trépied (100).

3. Élément de roulement (10) selon l'une quelconque des revendications précédentes, **caractérisé en ce que** dans la première position terminale (K1) de la cage (50) par rapport à la direction de déplacement translationnelle de la cage (50), au moins un corps de rouleau (40) peut être agencé entre la surface avant (124) de la partie extérieure d'articulation (120) de l'articulation de trépied (100) et le point central (32) de l'ouverture de logement (30).

4. Élément de roulement (10) selon l'une quelconque des revendications précédentes, **caractérisé en ce que** dans la première position terminale (K1) de la cage (50) par rapport à la direction de déplacement translationnelle de la cage (50), au moins un corps de rouleau (40) peut être agencé entre la surface de fond (126) de la partie extérieure d'articulation (120) de l'articulation de trépied (100) et le point central (32) de l'ouverture de logement (30).

5. Élément de roulement (10) selon l'une quelconque des revendications précédentes, **caractérisé en ce que** des éléments à ressort (60) sont prévus entre les corps de rouleau (40) et les pistes de roulement (122) et/ou le carter (20) pour accroître la force de frottement, lesdits éléments appuyant les corps de rouleau (40) via le carter (20) sur les pistes de roulement (122) et pouvant s'appuyer contre le tenon (112) dans l'ouverture de logement (30).

6. Élément de roulement (10) selon la revendication 5, **caractérisé en ce que** les éléments à ressort (60) sont disposés de telle sorte qu'ils appuient les corps de rouleau (40) sur les pistes de roulement (122) avec une force constante sur la totalité de la course de déplacement de l'élément de roulement (10) et/ou sur la totalité de l'angle de flexion admis de l'articulation de trépied (100).

7. Élément de roulement (10) selon l'une quelconque des revendications précédentes, **caractérisé en ce que** les première et deuxième surfaces de butée (52, 22) s'étendent respectivement le long d'un plan sur lequel la direction de déplacement translationnelle de la cage (50) se tient perpendiculairement au carter (20).

8. Élément de roulement (10) selon l'une quelconque des revendications précédentes, **caractérisé en ce que** les deuxièmes surfaces de butée (22) sont formées au moins en partie à travers les surfaces avant (28) du carter (22).

9. Élément de roulement (10) selon l'une quelconque des revendications précédentes, **caractérisé en ce que** les premières surfaces de butée (52) sont réalisées au moins en partie à travers les surfaces intérieures (54) d'une cage (50) formée sous la forme d'un cadre.

10. Élément de roulement (10) selon l'une quelconque des revendications précédentes, **caractérisé en ce que** la cage (50) comporte au moins un étai (56) s'étendant entre les deux pistes de roulement (122) opposées et formant au moins en partie les premières surfaces de butée (52).

11. Articulation de trépied (100), comportant une étoile de trépied (110) avec des tenons (112) saillant dans le plan radial, une partie extérieure d'articulation (120) comportant des paires de pistes de roulement s'étendant parallèlement à son axe de rotation avec des pistes de roulement (122) opposées les unes par rapport aux autres dans la direction circonférentielle et des éléments de roulement (10) avec les caractéristiques d'une des revendications précédentes.
